(19) Europäisches Patentamt
European Patent Office
Office européen des brevets

(11) Veröffentlichungsnummer: **0 170 026 B1**

(12) # EUROPÄISCHE PATENTSCHRIFT

(45) Veröffentlichungstag der Patentschrift: **06.03.91**

(51) Int. Cl.[5]: **B01J 20/18**, C01B 33/34

(21) Anmeldenummer: **85107521.8**

(22) Anmeldetag: **18.06.85**

(54) **Verfahren zur Erhöhung der Bruchfestigkeit von Granalien.**

(30) Priorität: **30.06.84 DE 3424144**

(43) Veröffentlichungstag der Anmeldung:
**05.02.86 Patentblatt 86/06**

(45) Bekanntmachung des Hinweises auf die Patenterteilung:
**06.03.91 Patentblatt 91/10**

(84) Benannte Vertragsstaaten:
**CH DE FR GB IT LI NL**

(56) Entgegenhaltungen:
**EP-A- 0 124 736**
**DE-A- 1 567 588**
**DE-B- 1 165 562**
**EP-A- 0 124 737**
**DE-A- 3 401 485**
**DE-B- 1 254 591**

(73) Patentinhaber: **BAYER AG**
**W-5090 Leverkusen 1 Bayerwerk(DE)**

(72) Erfinder: **Puppe, Lothar. Dr.**
**Am Weiher 10a**
**W-5093 Burscheid(DE)**
Erfinder: **Reiss, Gerhard, Dipl.-Ing.**
**Ottweilerstrasse 20**
**W-5090 Leverkusen 1(DE)**
Erfinder: **Ulisch, Günter**
**Thomas-Dehler-Strasse 9**
**W-5090 Leverkusen 1(DE)**

EP 0 170 026 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung von $SiO_2$-gebundenen Zeolithgranalien, mil erhöhter Bruchfestigkeit in Druckwechseladsorptionsanlagen.

Zeolithe sind Gerüstsilikate mit der allgemeinen Formel:
$x [M^I, M^{II}_{1/2}) \cdot AlO_2] \cdot y\, SiO_2 \cdot z\, H_2O$,
wobei $M^I$ = einwertige Kationen wie z.B. li, Na, K
und $M^{II}$ = zweiwertige Kationen wie z.B. Mg, Ca, Sr, Ba
sein können.

Synthetisch hergestellte Zeolithe werden in der Adsorptionstechnik in großem Umfang eingesetzt. Als Beispiele seien hier genannt: Zeolith A, Zeolith X, Zeolith Y, Zeolith L, Zeolith T, Zeolith S, Zeolith F, Zeolith H, Mordenit, Erionit, Ofretit, Ferrierit, ZSM5, ZSM11, Chabasit u.a.

Zeolithe vom Typ A, die der oxidischen Zusammensetzung

$$1.0 \pm 0,2\ M_{\frac{2}{n}}O \cdot Al_2O_3 \cdot 1.9 \pm 0,5\ SiO_2$$

und Zeolithe vom Typ X, die der oxidischen Zusammensetzung

$$1.0 \pm 0,2\ M_{\frac{2}{n}}O \cdot Al_2O_3 \cdot 2.5 \pm 0,5\ SiO_2$$

entsprechen, wobei M ein Metall und n reine Valenz bedeutet, dienen nach Verformen mit Bindemitteln zu Pellets, Kugeln und Granulaten zur Trocknung oder Feinreinigung von Gas- und Flüssigkeitsströmen. Auch bindemittelfreie Formlinge von Zeolith A finden Verwendung.

Bei den Verfahren der Trocknung und Feinreinigung werden aus dem Fluid relativ kleine Mengen Wasser oder andere Verunreinigungen, wie z.B. $CO_2$, $H_2S$, Acetylen, $NH_3$ u.a. entfernt. Handelt es sich dagegen um die adsorptive Abtrennung von Komponenten, die in dem Fluid in höherer Konzentration enthalten sind, so spricht man von Stofftrennungen.

Als Beispiele für industrielle Absorptionsverfahren seien angeführt: Trennung von Kohlenwasserstoffen, Gewinnung von Reinstwasserstoff durch Druckwechseladsorption (DWA); Trennung von Sauerstoff und Stickstoff durch DWA, Trocknung und Reinigung von Erdgas, Trocknung von Spaltgasen usw.

Vom Verfahren her unterscheidet man die statische Adsorption und die dynamische Adsorption von Zeolithen.

Als Beispiel für statische Adsorptionen seien die Verwendung von Molekularsiebformlingen für Mehrscheibenisolierglas, die Trocknung von Kältemittelkreisläufen sowie für Zeolithpulver die Wasserentfernung aus lösungsmittelfreien Polyurethansystemen und bei feuchtigkeitsempfindlichen Lacksystemen genannt.

Die vorher aufgeführten industriellen Adsorptionsverfahren beruhen alle auf der sog. dynamischen Adsorption. Bei allen Adsorptionsverfahren werden Zeolithe der Typen A und X in ihrer Syntheseform, d.h. mit Na als Kation bzw. in der durch Ionenaustausch modifizierten Form verwendet.

Beim Zeolith A kann durch die Kationen die Porenweite beeinflußt werden. In der Synthese wird Zeolith A im allgemeinen in der Na-Form gewonnen, die eine Porenweite von ca. 4 Å aufweist (s. D.W. Breck, Zeolithe Molecular Sieves J. Wiley, New York 1974). Durch Ionenaustausch lassen sich nun anstelle der $Na^+$-Ionen die voluminöseren $K^+$-Ionen einführen, wodurch die Poren auf ca. 3 Å verengt werden. Andererseits werden beim Austausch der $Na^+$-Ionen gegen zweiwertige $Ca^{2+}$-Ionen die Poren auf 5 Å erweitert, da statt zwei $Na^+$-Ionen nur jeweils ca. $Ca^{2+}$-Ion mit etwa gleichem Ionenradius in das Gitter eintritt. Diese Veränderung der Porenweite beeinflußt natürlich die Selektivität der Zeolithe aufgrund der Siebwirkung.

Die Adsorptionseigenschaften der Zeolithe beruhen auf zwei vollkommen verschiedenartigen Prinzipien. So können erstens Moleküle unterschiedlicher Querschnittsprojek tion dadurch voneinander getrennt werden, daß nur die kleineren durch die Zeolithporen einheitlicher Größe hindurchtreten und so Zugang zu den eigentlichen Adsorptionshohlräumen haben. Dieses Verhalten bezeichnet man als den sog. Siebeffekt bei der Adsorption. Zweitens werden dank der polaren Struktur der inneren Oberfläche der Zeolithkristalle stärker polare Moleküle bevorzugt adsorbiert vor weniger polaren. Das vorhandene elektrostatische Feld

bewirkt auch eine verstärkte Adsorption von stärker polarisierbaren Molekülen gegenüber weniger polarisierbaren (Polaritätseffekt). Hierbei wird immer vorausgesetzt, daß die Molekülgeometrie ein Eindringen in den Zeolithkristall durch die Poren erlaubt.

In der Adsorptionstechnik werden die zeolithischen Molekularsiebe in der Regel als Granulate eingesetzt. Als Bindemittel eignen sich z.B. Kaoline, Attapulgite, Bentonite, Sepiolithe u.ä. sowie auch Wassergläser, gelierfähige Kieselsäuresole und Aluminiumoxide.

Tongebundene Granalien werden in der Absorptionstechnik vielfältig eingesetzt. Sie weisen allerding den Nachteil einer hohen Calciniertemperatur ( > 600 °C) auf, um ein hartes, bruchfestes und wasserstabiles Granulat zu erhalten. In Abhängigkeit von Tonbindemittel und der Herstellung werden die Adsorptionsleistungen beeinflußt. Aluminiumoxide können aufgrund der Eigenadsorption und der katalytischen Eigenschaften bei vielen Adsorptionen, die auf die zeolithische Molekularsiebwirkung beruhen, zu Störungen führen.

Ein poröses Zeolithgranulat mit einer für Adsorptionszwecke gut geeigneten Makroporenstruktur erhält man, wenn als Bindemittel gelierfähiges Kieselsol eingesetzt wird. Nach der deutschen Patentschrift 1 165 562 können pulverförmige Molekularsiebzeolithe mit wäßrigem, stabilen Kieselsäuresol zu einer fließfähigen Suspension verrührt, die Suspension nach Zusatz eines Gelierkatalysators in einer mit Wasser nicht mischbaren Flüssigkeit zu Tropfen der gewünschten Größe verteilt und schließlich die durch Sol/Gel-Umwandlung entstandenen Perlgranulate aus der Flüssigkeit entfernt werden. Hierbei entsteht ein $SiO_2$-gebundenes perlförmiges Granulat, dessen Bindemittelanteil durch geeignete Maßnahmen, wie sie in der deutschen Patentschrift beschrieben sind. in ein sog. binderfreies Granulat überführt werden können. Durch diese Maßnahme wird die Adsorptionskapazität naturgemäß erhöht, da ja jetzt 100 % Zeolith vorliegen, die Bruchfestigkeit und die Abriebbeständigkeit werden deutlich verbessert. Allerdings wird hierdurch die vorher vorhandene Makroporenstruktur beeinträchtigt.

Für bestimmte Einsatzgebiete auf dem Adsorptionssektor ist es wünschenswert, daß eine schnelle Adsorption bzw. schnelle Desorption beim Molekularsiebgranulat vorhanden ist, z.B. bei der sog. Druckwechseladsorption. Diese Adsorptionseigenschaften sind bei $SiO_2$-gebundenen Molekularsiebgranulaten aufgrund ihrer Makroporenstruktur im gewünschten Umfang vorhanden. Für den technischen Einsatz sind allerdings die $SiO_2$-gebundenen Granulate aufgrund ihrer nicht ausreichenden Abriebfestigkeit und Bruchhärte weniger gut geeignet.

Aufgabe der vorliegenden Erfindung war es daher, für die Verwendung in Druckwechseladsorptionsanlagen Granulate bereit zu stellen, die unter Erhöhung der Bruchfestigkeit und Verbesserung der Abriebswerte die für die Adsorptionen günstige Makroporenstruktur der $SiO_2$-gebundenen Granalien aufweisen.

Gegenstand der vorliegenden Erfindung ist die Verwendung von $SiO_2$-gebundenen zeolithischen Molekularsiebgranulaten, die mit wäßrigen Lösungen zweiwertige Metalle behandelt wurden, in Druckwechseladsorptionsanlagen.

Überraschenderweise wurde gefunden, daß eine Behandlung des $SiO_2$-haltigen Granulats mit Lösungen der Salze von Erdalkalikationen wie z.B. $Mg^{2+}$, $Ca^{2+}$, $Sr^{2+}$ oder auch Salzen von Übergangskationen wie z.B. $Mn^{2+}$, $Ni^{2+}$, $Zn^{2+}$ usw. eine deutliche Erhöhung der Bruchfestigkeit stattfinden (s. folgende Tabelle 1). Bevorzugt werden die Granulate mit einer Calciumchlorid-Lösung behandelt.

| Beispiel | Eingetauschtes Ion | Bruchhärte (Kornfraktion 2 - 3 mm) [kg] |
|---|---|---|
| 1 | Mg | 3.4 |
| 2 | Ca | 3.5 |
| 3 | Sr | 4.4 |
| 4 | Ni | 4.7 |
| 5 | Mn | 4.4 |
| 6 | Zn | 3.5 |
| Vergleich | Na | 3.1 |
| 7 | Li | 1.0 |
| 8 | K | 2.9 |

Wie aus der Tabelle ersichtlich ist, findet beim Eintausch mehrwertiger Kationen eine Zunahme der Bruchfestigkeit statt, während beim Eintausch von einwertigen Kationen ein gleichbleibender bzw. ein deutlicher Abfall der Bruchfestigkeit auftritt.

Aus naheliegenden Gründen ist für die Behandlung des Granulats Calcium besonders geeignet. Bei einer Behandlung des Granulats mit wäßrigen Salzlösungen findet naturgemäß ein Ionenaustausch am Zeolith statt. Daß daher eine bestimmte Menge an zweiwertigen Ionen in das Granulat eingebracht werden muß, um die gewünschte Erhöhung der Bruchfestigkeit zu erzielen, zeigt die nachstehende Tabelle 2.

| Beispiel | CaO im Granulat [Mol/Mol $Al_2O_3$] | Bruchhärte (Kornfraktion 3 - 4 mm) [kg] |
|---|---|---|
| | - | 4.0 |
| 9 | 0.58 | 4.8 |
| 10 | 0.65 | 5.7 |
| 11 | 0.81 | 7.1 |
| 12 | 0.89 | 7.6 |
| 13 | 1.01 | 8.0 |

Die Behandlung der Granulate erfolgt bei Raumtemperatur oder auch bei erhöhten Temperaturen, bevorzugt 30 - 100° C Die Behandlungszeit kann zwischen wenigen Stunden und mehreren Tagen gewählt werden, bevorzugt wird eine Zeit zwischen 1.0 und 10 Stunden. Zur Intensivierung der Behandlung kann eine mehrfache Wiederholung erfolgen. Aus wirtschaftlichen Gründen wird die mindestnotwendige Behandlungsdauer bzw. Anzahl der Behandlungen ermittelt, die jeweils von den verschiedenen Anwendungsgebieten des Granulats abhängig ist.

Beim Einsatz von Erdalkalimetallsalzen kann der für bestimmte Anwendungen geforderte Ionenaustausch am Zeolith mit dem erfindungsgemäßen Behandeln der $SiO_2$-gebundenen Granalien kombiniert werden.

Erfindungsgemäß werden die gehärteten Granulate bei den an sich bekannten Verfahren der Druckwechseladsorption eingesetzt. Die Überlegenheit der $SiO_2$-gebundenen Molekularsiebgranulate gegenüber

dem Stand der Technik, tongebundenes Molekulargranulat, kommt in einer um 30 % höheren Leistung bei der Sauerstoffanreicherung aus Luft zum Ausdruck.

Als weiteres Beispiel für die Überlegenheit $SiO_2$-gebundener und gehärteter Granalien sei hier die Luftreinigung angegeben, wobei mit $SiO_2$-gebundenen Granulat eine deutliche um 28 % höhere Leistung gegenüber tongebundenem Molekularsiebgranulat erzielt wird.

Die Herstellung der Granalien wird in den nachfolgenden Beispielen beschrieben.

Beispiel 1

2000 g $SiO_2$-haltiges Na-Zeolith-Granulat der Siebfraktion 2 - 3 mm werden in eine Glassäule gefüllt und mit 1,6 Liter einmolarer $MgCl_2$-Lösung bei 80° C behandelt. Dabei wird die $MgCl_2$-Lösung während 4 Stunden ständig durch die Säule umgewälzt. Das Granulat wurde nach zweimaliger Behandlung anschließend chloridfrei gewaschen, getrocknet und bei 500° C aktiviert. Die Bruchhärte des behandelten Materials stieg von 3.1 auf 3.4 kg und der Abrieb nahm um 50 % ab.

Beispiel 2

2000 g $SiO_2$-haltiges Na-Zeolith-A-Granulat der Siebfraktion 2 - 3 mm werden in eine Glassäule gefüllt und mit 1,6 Liter einmolarer $CaCl_2$-Lösung bei 80° C behandelt. Dabei wird die CaCl-Lösung während 4 Stunden ständig durch die Säule umgewälzt. Das Granulat wurde nach zweimaliger Behandlung chloridfrei gewaschen, getrocknet und bei 500° C aktiviert.

Die Bruchhärte des behandelten Materials stieg von 3.1 auf 3.5 kg und der Abrieb nahm um 60 % ab.

Beispiele 3 bis 6

Die Behandlungsbedingungen für die $SiO_2$-gebundenen Granulate mit den Metallsalzlösungen entsprechen dem Beispiel 1.

Die Bruchhärten werden durch die Behandlung mit Salzlösung zweiwertigen Ionen erhöht.

Beispiel 7 und 8

Die Behandlungsbedingungen für die $SiO_2$-gebundenen Granulate mit den Metallsalzlösungen entsprechen dem Beispiel 1.

Die Bruchhärten werden durch die Behandlung mit Salzlösungen einwertigen Ionen verringert oder bleiben gleich.

Beispiele 9 bis 13

Hier wurden die Behandlungsbedingungen so gewählt, daß steigende Mengen an CaO im Granulat verbleiben. Als Granulat wurde ein $SiO_2$-gebundenes Na-Zeolith-Granulat mit der Körnung 3 - 4 mm gewählt. Die Ausgangsbruchhärte von 4,0 kg steigt mit zunehmendem CaO-Gehalt im Granulat bis auf 8.0 kg an.

Beispiel 14

3000 g $SiO_2$-haltiges Na-Zeolith-Granulat der Siebfraktion 2-4 mm werden in eine Glassäule gefüllt und mit 2,4 Liter einmolarer $CaCl_2$-Lösung bei 80° C behandelt. Dabei wird die $CaCl_2$-Lösung während 4 Stunden ständig durch die Säule umgewälzt. Das Granulat wurde nach einmaliger Behandlung chloridfrei gewaschen, getrocknet und bei 500° C aktiviert.

Die Bruchhärte des behandelten Granulats stieg von 3,3 kg auf 4,4 kg mittlerer Bruchhärte an.

Beispiel 15

1000 g $SiO_2$-haltiges Na-Zeolith X-Granulat der Siebfraktion 2-4 mm werden in eine Glassäule gefüllt und mit 0,8 Liter einmolarer $CaCl_2$-Lösung bei 80° C behandelt. Dabei wird die $CaCl_2$-Lösung während 4 Stunden laufend durch die Säule umgewälzt. Das Granulat wurde nach zweimaliger Behandlung chloridfrei gewaschen, getrocknet und bei 500° C aktiviert.

Die Bruchhärte des behandelten Materials stieg von 3,3 kg auf 4,8 kg mittlerer Bruchhärte an.

## Ansprüche

1. Verwendung von $SiO_2$-gebundenen zeolithischen Molekularsiebgranulaten, die mit wäßrigen Lösungen zweiwertiger Metalle behandelt wurden, in Druckwechseladsorptionsanlagen.

2. Verwendung gemäß Anspruch 1, dadurch gekennzeichnet, daß die Molekularsiebgranulate mit einer Calciumchlorid-Lösung behandelt wurden.

## Claims

1. The use of $SiO_2$-bound zeolitic molecular sieve granules treated with aqueous solutions of divalent metals in alternating-pressure adsorption plants.

2. The use claimed in claim 1, characterized in that the molecular sieve granules are treated with a calcium chloride solution.

## Revendications

1. Utilisation de granulés de tamis moléculaires zéolithiques liés par $SiO_2$ et qui ont été traités par des solutions aqueuses de métaux divalents dans des installations d'adsorption à pression variable.

2. Utilisation selon la revendication 1, caractérisée en ce que les granulés de tamis moléculaires ont été traités par une solution de chlorure de calcium.